# FASCICULE DE BREVET EUROPEEN

(11) **EP 4 571 447 B1**
(45) Date de publication et mention de la délivrance du brevet: **25.03.2026**
(21) Numéro de dépôt: 24215514.1
(22) Date de dépôt: 26.11.2024
(51) Int. Cl.: G05D 1/40

(54) **DISPOSITIF ET PROCÉDÉ DE GESTION D'ÉNERGIE POUR LES PHASES DE DESCENTE ET D'APPROCHE D'UN AÉRONEF**
VORRICHTUNG UND VERFAHREN ZUM ENERGIEMANAGEMENT FÜR DIE ABSTIEG- UND ANFLUGPHASE EINES FLUGZEUGS
DEVICE AND METHOD FOR ENERGY MANAGEMENT FOR THE DESCENT AND APPROACH PHASES OF AN AIRCRAFT

(30) Priorité: 13.12.2023 FR 2314070
(43) Date de publication de la demande: 18.06.2025
(73) Titulaire: THALES, 92190 Meudon (FR)
(72) Inventeur: BOYER, Johan, 31036 TOULOUSE (FR); DURAND, Geoffrey, 31036 TOULOUSE (FR); RIVES, Pascal, 31036 TOULOUSE (FR)
(74) Mandataire: Atout PI Laplace

(56) Documents cités:
- FR-A1- 3 012 630
- FR-A1- 3 064 762
- FR-A1- 3 100 061

## Description

### Domaine Technique

La présente invention concerne le domaine de la gestion de vol et concerne plus spécifiquement un procédé de gestion de l'énergie d'un aéronef lors des phases de descente et d'approche.

### Etat de la technique

Les systèmes de gestion de vol ou manager de vol, connus selon l'anglicisme générique « Flight Management System » (FMS), offrent aux pilotes une assistance pendant le vol en fournissant des renseignements sur le pilotage, la navigation, les estimées, la consommation de carburant, etc.

Il existe différents systèmes de gestion de vol dont les capacités et les fonctionnalités peuvent fortement varier en fonction de l'appareil (hélicoptère, avion de ligne...), de son usage (civil, militaire...) et d'autres facteurs (époque de conception notamment).

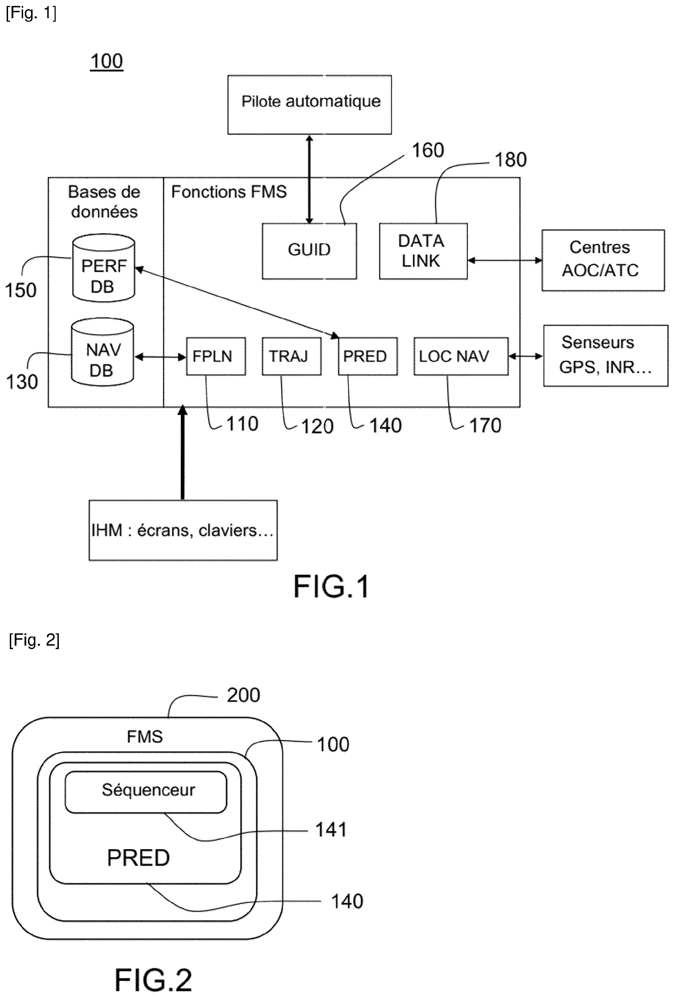

Les fonctionnalités ou services disponibles sur un FMS 100 sont fournis par divers composants illustrés sur la figure 1, et comprennent généralement un plan de vol 110 ; une trajectoire latérale 120 ; une base de données de navigation 130 ; des prédictions 140 ; une base de données de performances 150 ; un guidage 160 ; une localisation 170 ; une liaison de donnée numérique 180. Le pilote dispose d'interfaces homme-machine (IHM) lui permettant de gérer un plan de vol, avant le départ et pendant la navigation.

Le module « Plan de vol » ou FPLN 110, permet de saisir des éléments géographiques constituant le squelette de la route à suivre (les procédures de départ et d'arrivée, les points de passages ou « waypoints », les routes ou « airways »).

Le module de trajectoire latérale ou TRAJ 120 permet de construire une trajectoire continue à partir des points du plan de vol, en respectant les performances avion et les contraintes de confinement (RNP).

La base de données de navigation ou NAVDB 130, contient les informations pour construire des routes géographiques et des procédures à partir des données incluses dans les bases (i.e. les points de passage, les balises, les segments ou legs d'interception ou d'altitude...).

Le module de prédictions ou PRED, 140 permet de construire un profil vertical optimisé sur une trajectoire latérale.

La base de données de performances ou PERF DB 150, contient les paramètres aérodynamiques et moteurs de l'appareil.

Le module de guidage ou GUID 160, permet de guider dans les plans latéraux et verticaux l'aéronef sur sa trajectoire 4D, tout en optimisant la vitesse.

Le module de localisation ou « Navigation LOC NAV » 170, permet d'effectuer une localisation optimale de l'aéronef en fonction de diverses sources de données radio de navigation, fournies par des systèmes de positionnement et des capteurs, tels que des GPS, GALILEO, des balises radios VHF, des centrales inertielles.

Le module de liaison de donnée numérique ou DATALINK, 180 permet de communiquer avec les centres de contrôle et les autres aéronefs.

À partir d'un plan de vol, le FMS peut calculer une trajectoire de référence à suivre, qui est affichée sur des écrans de visualisation, avec une estimation d'un ensemble de données susceptibles d'être utiles au pilote pendant le vol, tel que les heures de passage aux différents points de passage du plan de vol, l'estimation de la quantité de fuel à bord, etc. Les résultats des calculs effectués par un calculateur du FMS ainsi que les informations de vol sont généralement rendus sur des systèmes d'affichage couplés au FMS pour transformer les données en informations lisibles.

Le FMS est ainsi en mesure de contrôler la totalité d'un vol, du décollage à l'atterrissage en effectuant tous les calculs nécessaires, à travers un calculateur ou ordinateur de gestion de vol ou « Flight Management Computer » (FMC) selon l'anglicisme connu.

En vue de l'atterrissage de l'aéronef, une procédure d'arrivée est sélectionnée, (stratégie d'approche par défaut dans le système de gestion de vol FMS ou stratégie choisie par le pilote), et durant les phases de descente et d'approche, le FMS permet de calculer un profil de vitesse et d'altitude optimisé selon la performance avion, profil qui respecte toutes les contraintes contenues dans la procédure d'arrivée sélectionnée, tout en passant latéralement par l'ensemble des points de passage définis dans le plan de vol.

Des normes règlementent la façon dont les profils de vol sont calculés en phase d'arrivée. Bien qu'une description détaillée du calcul de profils typiques de descente et d'approche ne soit pas faite dans le présent document, il est à considérer que de telles informations font partie des connaissances générales de l'homme du métier.

En synthèse, il est toléré de calculer une stratégie de dissipation d'énergie sous réserve de fournir des garanties sur les excursions verticales, et de les contenir dans un espace acceptable.

La trajectoire ainsi obtenue constitue une référence assurant à l'avion, si l'asservissement sur ce profil calculé est fait, d'arriver dans un état énergétique adapté à l'atterrissage.

Les procédures de vol dites CDA pour « Continuous Descent Approach » selon l'anglicisme consacré, ont pour but de descendre un aéronef vers une piste d'atterrissage en poussée moteur réduite afin de minimiser les nuisances de bruit et de pollution basse altitude.

Actuellement, les pilotes cherchent à effectuer la descente le plus longtemps possible dans un régime ralenti dit « IDLE thrust » ou « IDLE » en anglais, sur une portion située entre le point de fin de croisière où la mise en descente commence, point qui est désigné communément par « Top of Descent » ou « ToD », et un point, le plus proche possible de la piste, après lequel la poussée réduite ne peut plus être tenue. La longueur de ce segment en régime IDLE dépend de contraintes d'altitude et de vitesse et/ou de contraintes de temps qui sont définies sur les procédures de descente.

De manière générale, les contraintes en altitude, pente, vitesse ou temps aux points de passage ou du plan de vol peuvent être exprimées de diverses façons. Les contraintes en altitude peuvent être de type « AT » (passage au point à l'altitude donnée), « AT OR ABOVE » (passage à ou au-dessus de l'altitude donnée), « AT OR BELOW » (passage à ou en-dessous de l'altitude) ou « WINDOW » (passage entre deux altitudes). Les contraintes en vitesse peuvent être du type « AT » (passage au point à la vitesse donnée), « AT OR ABOVE » (passage à ou au-dessus de la vitesse donnée) ou « AT OR BELOW » (passage à ou en-dessous de la vitesse. Les contraintes horaires peuvent être du type « AT » (passage au point à l'heure donnée), « AT OR AFTER » (passage à ou après l'heure donnée), « AT OR BEFORE » (passage à ou avant l'heure donnée) ou « WINDOW » (passage entre deux heures).

Les procédures de vol dites « vertes » ou « green » qui visent, entre autre à réduire le bruit et la consommation de carburant, consistent à faire voler l'aéronef le plus haut possible par rapport aux habitations, en maximisant les portions à poussée réduite. La diminution du bruit passe ainsi par l'augmentation de l'altitude du profil de référence et par la réduction du bruit « moteur » et il est alors nécessaire d'effectuer la descente en poussée « au ralenti » IDLE le plus possible. Il faut alors éviter les segments dont les pentes requièrent de remettre de la poussée pour tenir le plan et la vitesse.

Le maintien du régime IDLE le plus longtemps possible diminue mécaniquement les rejets de polluants car c'est le régime de moindre consommation de carburant. Cette diminution de consommation de carburant remplit également les objectifs de réduction des coûts opérationnels des compagnies aériennes.

Enfin, opérationnellement, les équipages ont besoin de contrôler la dissipation de l'énergie totale avion lors de la descente, i.e. de contrôler les décélérations et pertes d'altitude pour arriver avec une énergie compatible de l'atterrissage en début de segment final, i.e. un segment aligné sur la piste, généralement sur une pente proche de -3°, et souvent matérialisé par un faisceau radioélectrique de type « Glide Slope ».

Un problème technique général des systèmes actuels de gestion de vol, est qu'ils ne permettent pas d'enchaîner efficacement des décélérations et des pertes d'altitude contraintes par les procédures.

En effet, la stratégie classiquement appliquée par les FMS de l'état de l'art pour des descentes en mode CDA est de voler sur une pente géométrique entre les différentes contraintes d'altitude en procédure.

Or la pente géométrique est sous optimale aussi bien pour les segments à vitesse constante que pour les segments décélérés.

En effet, les décélérations ne sont généralement pas ou peu efficaces sur des segments à pente constante entre deux contraintes d'altitude contraignantes (i.e. des contraintes impératives devant être respectées par l'aéronef).

De façon générale, il en résulte opérationnellement les inconvénients suivants :
- Une surconsommation de carburant sur les segments à vitesse constante menant à des émissions polluantes de CO2 excessives.
- Une utilisation accrue et excessive des aérofreins sur les segments décélérés entrainant un inconfort cabine, du bruit et de la charge de travail pour l'équipage.
- Des décélérations trop longues avec des taux de décélérations trop faibles, et à peine perceptibles par le pilote et le contrôle aérien.
- Une mise en configuration de l'aéronef excessivement anticipée qui entraîne une augmentation du bruit aérodynamique, prédominant sur le bruit moteur dans les phases d'atterrissage.

De plus, l'utilisation des moteurs ou des aérofreins augmentent également l'empreinte sonore de l'aéronef au sol ce qui n'est pas non plus souhaitable dans un contexte d'urbanisation croissante proche des aéroports.

La présence de contraintes d'altitude en haute altitude, souvent combinée à des contraintes de vitesse, est un scénario dont l'occurrence augmente avec l'augmentation du trafic. Cela conduit les systèmes actuels à calculer des segments géométriques jusque très haut, proche du niveau de croisière, pénalisant fortement l'efficacité des aéronefs en phase d'arrivée.

En effet, les systèmes de gestion de vol actuels calculent un profil dit géométrique, c'est-à-dire à pente fixe jusqu'en bas du plan de vol, dès qu'une contrainte incompatible d'un régime IDLE est trouvée, bien qu'il soit théoriquement possible de rebasculer en régime IDLE sous la contrainte en question.

La descente est alors divisée en deux parties appelées descente « géométrique » et descente « IDLE ».

Le point du plan de vol séparant les deux types de descente (géométrique et IDLE) est appelé le point de passage géométrique ou *« Geometrical Path Point »* en anglais (GPP). Le point GPP est un point du plan de vol séparant le segment de descente géométrique du segment de descente IDLE. Il est généralement déterminé par la première contrainte d'altitude contraignante. Cela signifie que depuis le début de la descente jusqu'à ce point GPP, les prédictions de la descente se font à poussée moteur IDLE et ensuite les prédictions sont calculées à l'aide des pentes prédites pour respecter les contraintes d'altitude contraignantes.

Il peut être cité le brevet FR 3 012 630 B1 de la Demanderesse qui propose un procédé de construction d'une trajectoire verticale destiné à optimiser les manœuvres d'un aéronef dans une phase de descente et d'approche d'une piste d'un aéroport d'arrivée, en maximisant le nombre et la longueur de segments réalisés à poussée réduite pouvant être intégrés dans la procédure de descente et d'approche jusqu'au point d'atterrissage. Cette méthode présente des limitations, en particulier il n'est pas pris en compte une répartition entre la dissipation d'énergie cinétique et la dissipation d'énergie potentielle.

Ainsi, les limites des solutions connues sont liées au fait que l'utilisation des moteurs entrainent une augmentation de la consommation de carburant et des émissions de polluants d'une part, et d'autre part que l'utilisation des aérofreins entraîne une augmentation de la charge de travail de l'équipage.

De plus, les solutions connues ne prennent pas en compte les performances de l'aéronef ainsi que le contexte dans lequel l'aéronef évolue, générant alors une usure prématurée de la structure, et augmentant mécaniquement les coûts de maintenance.

Ainsi, il n'existe pas de système de gestion de vol qui permette de calculer un profil de dissipation d'énergie « sur mesure » lors des phases de descente et d'approche, qui soit adapté à la fois aux performances intrinsèques de l'avion et aux conditions environnementales qu'il rencontre.

La présente invention répond au besoin.

### Résumé de l'invention

Un objet de l'invention est ainsi de pallier les manques de l'art antérieur en proposant un procédé pour établir, pour les phases de descente et d'approche d'un aéronef, une stratégie de dissipation d'énergie efficace, sous la forme d'un calcul d'une trajectoire 4D de descente et d'approche optimisée, qui vise à maximiser la tenue du régime IDLE tout en minimisant l'utilisation des aérofreins via des décélérations plus efficaces.

Avantageusement, l'invention permet de mettre en œuvre des procédures de vol durables sur le plan environnemental et économique dans les phases de descente et d'approche, et qui offrent des avantages significatifs en termes de carburant, d'émissions et de bruit.

Généralement, l'invention consiste à calculer et à présenter à l'équipage une stratégie de dissipation d'énergie pour stabiliser un aéronef à une certaine altitude depuis son niveau de croisière (1000 ft au-dessus du niveau de la piste, « AGL » pour « Above Ground Level » selon l'anglicisme consacré, par exemple), avec un affichage explicite des hypothèses de calcul pour optimiser la descente et l'approche, afin de réduire la charge de travail de l'équipage, et de faciliter la prise de décision à bord, et par voie de conséquence de simplifier et fluidifier la gestion du trafic par l'ATC en vue de l'atterrissage de l'aéronef.

Dans le contexte des procédures de vol dites CDO pour « Continuous Descent Operations » selon l'anglicisme consacré, et des procédures vertes (visant une diminution des nuisances sonores et des polluants), la mise en œuvre du procédé de l'invention permet d'obtenir une stratégie de dissipation d'énergie qui sert de référence pour le guidage automatique de l'avion afin d'obtenir l'ensemble des bénéfices attendus.

Le procédé de l'invention permet le calcul d'une trajectoire 4D de descente et d'approche plus efficace, car tenant compte des performances propres de l'aéronef, et du contexte dans lequel il évolue (conditions courantes, procédures et environnement).

La trajectoire 4D calculée propose au pilote la meilleure stratégie à adopter selon l'état de l'aéronef et les conditions de vol actuelles, facilitant la compréhension à bord.

L'invention se distingue de l'art antérieur en proposant une nouvelle capacité permettant de cibler les zones à ajuster de façon cohérente avec les opérations réelles. Ainsi, le procédé de l'invention permet de déterminer des zones dites de faible énergie (« Low Energy » en anglais) et des zones dites de haute énergie (« High Energy » en anglais), pour définir avantageusement des segments (i.e. des pentes) qui sont à abaisser ou à augmenter.

Ainsi, dans les cas de faible énergie, un ajustement à vitesse constante permet de conserver un ensemble de segments suffisamment pentus pour répondre au besoin du contrôle aérien tout en supprimant l'utilisant des aérofreins telle que requise actuellement sur ces cas. A l'inverse, dans les cas de haute énergie, il est donné une priorité à l'utilisation des aérofreins sur les segments décélérés, afin d'une part de conserver une capacité à respecter une restriction de vitesse venant du contrôle aérien sur les segments à vitesse constante via l'utilisation des aérofreins, et d'autre part afin de répondre aux pratiques opérationnelles des pilotes, qui privilégient l'utilisation des aérofreins pour réduire la vitesse de l'aéronef plutôt que pour maintenir une vitesse.

Avantageusement, le procédé selon l'invention permet d'ajuster la répartition de dissipation d'énergie entre énergie cinétique et énergie potentielle.

Un autre avantage de la présente invention, réside dans un découpage de sections de travail qui permet d'éviter que le traitement d'une section engendre dans la section voisine une construction trop peu pentue, ou à l'inverse trop pentue.

Avantageusement, après le calcul de la trajectoire 4D, tous les éléments nécessaires à la compréhension de la stratégie verticale qui permet principalement de minimiser l'utilisation des moteurs, des aérofreins et de réduire les longueurs de décélération, sont présentés au pilote (via des IHM, les écrans ND, VD et MFD peuvent être utilisés) qui connait alors les actions requises le long de la trajectoire calculée, ce qui accroit sa compréhension de la situation énergétique de l'aéronef et lui permet d'anticiper au mieux la stratégie optimale à mettre en œuvre pour dissiper son énergie.

Avantageusement, le système de gestion de vol peut adapter automatiquement la stratégie verticale proposée par une modification de la configuration avion de façon optimisée, et/ou une modification de la stratégie de vitesse.

L'invention peut être utilisée de manière préférentielle en relation avec un système de gestion de vol de type FMS. Elle peut être facilement personnalisée à différentes versions de systèmes de gestion de vol. Elle peut aussi être implémentée sur une tablette de vol extérieure à un système de gestion, i.e. dans un système non avionique, et couplée opérationnellement avec un tel système de gestion de vol.

L'invention est applicable dans n'importe quel calcul de trajectoire et de prédictions présent dans un FMS ou dans tout moyen de navigation embarqué ou non gérant la trajectoire d'un aéronef (drone par exemple).

L'invention peut être généralisée à tous les aéronefs pilotés, en vol ou au sol, et équipés d'un système de gestion de trajectoire.

Pour obtenir les résultats recherchés, il est proposé un procédé mis en œuvre par un ordinateur pour la gestion de l'énergie à dissiper pour un aéronef, lors des phases de descente et d'approche.

Le procédé comprend des étapes exécutées au cours d'un calcul à rebours de prédictions par un système de gestion de vol, quand un point de passage est identifié comme un point d'ancrage ayant des contraintes en altitude mais pas de contraintes en pente.

Les étapes du procédé consistent à:
- déterminer une trajectoire de vol initiale IDLE en régime moteur ralenti, entre un point d'ancrage et le niveau de vol de croisière, et évaluer si toutes les contraintes en altitude sont satisfaites pour la trajectoire IDLE ;
- si au moins une contrainte en altitude n'est pas satisfaite, définir une section de travail entre le point d'ancrage et le point de passage où la contrainte d'altitude n'est pas satisfaite, et déterminer si dans cette section, il existe à la fois un ou plusieurs segments de vol décélérés et un ou plusieurs segments de vol à vitesse constante ;
- s'il existe au moins un segment de vol décéléré et au moins un segment de vol à vitesse constante :
   - évaluer un delta d'énergie pour rejoindre la trajectoire IDLE ; et
   - construire un profil de vol optimisé tenant compte de l'évaluation, le profil de vol optimisé consistant pour ladite section soit à remettre exclusivement de la poussée, soit à utiliser exclusivement les aérofreins, tout en maximisant la distance parcourue en IDLE.

L'invention propose plusieurs modes de réalisation alternatifs ou combinés.

Selon un aspect particulier de l'invention, l'étape d'évaluation consiste à déterminer si le delta d'énergie est négatif ou positif.

Selon un aspect particulier de l'invention, l'étape de construction d'un profil de vol optimisé consiste à construire un profil faible énergie consistant à remettre exclusivement de la poussée si le delta d'énergie est négatif.

Selon un aspect particulier de l'invention, l'étape de construction d'un profil de vol optimisé consiste à construire un profil haute énergie consistant à utiliser exclusivement les aérofreins si le delta d'énergie est positif.

Selon un aspect particulier de l'invention, l'étape de construction d'un profil de vol consistant à remettre exclusivement des aérofreins comprend des étapes consistant à déterminer un angle de la trajectoire de vol, et à faire une intégration à rebours segment par segment, jusqu'à l'atteinte d'une condition de vérification d'atteinte de la contrainte cible.

Selon un aspect particulier de l'invention, l'étape de déterminer dans une section de travail les segments de vol décélérés et les segments de vol à vitesse constante, comprend une étape consistant à construire un profil de vol géométrique s'il n'existe pas sur ladite section de travail à la fois au moins un segment de vol décéléré et un segment de vol à vitesse constante.

Selon un aspect particulier de l'invention, le procédé comprend une étape consistant à déterminer si la vitesse de l'aéronef est gérée en mode sélecté et si oui maintenir uniquement la construction d'un profil de vol géométrique.

Selon un aspect particulier de l'invention, le procédé comprend de plus une étape consistant à afficher sur un écran d'affichage du cockpit, la trajectoire obtenue par un profil de vol optimisé.

Selon un aspect particulier de l'invention, le procédé comprend de plus une étape consistant à définir un nouveau point d'ancrage.

L'invention a aussi pour objet un dispositif pour gérer l'énergie à dissiper pour un aéronef lors des phases de descente et d'approche, le dispositif comprenant des moyens pour mettre en œuvre les étapes du procédé de l'invention.

Un autre objet de l'invention est un système de gestion de vol pour aéronef comprenant un dispositif selon l'invention.

Un objet de l'invention est aussi un équipement non-avionique pour aéronef comprenant un dispositif selon l'invention.

L'invention concerne également un produit programme d'ordinateur comprenant des instructions de code permettant d'effectuer les étapes du procédé de l'invention, lorsque ledit programme est exécuté sur un ordinateur.

### Brève Description des Dessins

D'autres caractéristiques et avantages de la présente invention apparaîtront mieux à la lecture de la description qui suit en relation aux dessins suivants.
La figure 1 déjà présentée, illustre schématiquement la structure et les fonctions d'un système de gestion de vol de type FMS permettant d'implémenter le dispositif de l'invention ;
La figure 2 illustre schématiquement un exemple d'implémentation de l'invention dans un FMS ;
La figure 3 représente sous la forme d'un logigramme les étapes du procédé de l'invention, dans un mode de réalisation nominal ;
La figure 4 représente sous la forme d'un logigramme un mode de réalisation de l'étape de construction d'un profil LE à « faible énergie » ;
La figure 5 représente sous la forme d'un logigramme un mode de réalisation de l'étape de construction d'un profil HE à « haute énergie » ;
La figure 6 représente sous la forme d'un logigramme une variante de réalisation des étapes de construction d'un profil à « haute énergie » selon le procédé de l'invention ;
La figure 7 illustre des pentes obtenues par une construction d'un profil HE dans un mode de réalisation de l'invention ;
La figure 8 illustre l'effet du taux de décélération sur l'altitude.

### Description détaillée de l'invention

En plus des définitions précédemment données, il est maintenant rappelé la signification de plusieurs acronymes et expressions, soit couramment employés dans le domaine aéronautique, soit utilisés dans la suite de la description.

FPA pour « Flight Path Angle » : angle de la trajectoire de vol.

CSTR pour « Constraint » : contrainte.

CRZ FL pour « Cruise Flight Level» : niveau de croisière.

CAS pour « Calibrated Air Speed » : vitesse conventionnelle.

ISO CAS : vitesse conventionnelle constante.

TSP pour « Too Steep Path » : segment vertical trop pentu.

MDR pour « Minimum Deceleration Rate » : taux de décélération minimum.

AP pour « Anchor Point » : Point d'ancrage défini comme un point contraint en altitude au-delà de l'approche finale, qui est identifié au cours d'un calcul de prédictions à rebours par un système de gestion de vol.

### VS pour « Vertical Speed » : vitesse verticale

« Backward » : mode de calcul dit à l'envers ou à rebours, partant d'un point de destination et remontant vers un point de départ.

« Forward » : mode calcul dit vers l'avant, partant d'un point de départ et allant vers un point de destination.

GEO pour « Geometrical » : par exemple un profil géométrique.

LE pour « Low Energy » : par exemple un profil à faible ou basse énergie.

HE pour « High Energy » : par exemple un profil à haute énergie.

ΔE pour un delta d'énergie : écart d'énergie total (cinétique et/ou potentielle) entre le point d'aboutissement d'un profil calculé à rebours en poussée Idle depuis un AP et une contrainte en procédure.

Dans un mode de réalisation illustré sur la figure 2, le procédé de l'invention est mis en œuvre par un séquenceur 141 dans un module de prédictions 140 d'un FMS 100 ou d'un système de gestion de vol ayant une architecture fonctionnelle comparable à un FMS, au sein d'un aéronef 200. Le FMS étant généralement connecté à de nombreux calculateurs (plusieurs dizaines), certains peuvent être sollicités pour mettre en œuvre une ou plusieurs étapes du calcul d'une trajectoire 4D de descente et d'approche selon le procédé de l'invention.

Dans un mode de réalisation, une *« machine à état »* (ou *« automate fini* ») peut être utilisée comme séquenceur 141. En électronique numérique, un automate fini peut être construit comme circuit logique programmable, ou un automate programmable industriel, avec des fonctions logiques réalisées par bascules ou relais. Une implémentation matérielle comprend en général un registre pour stocker les variables d'état, un circuit de logique combinatoire qui détermine les transitions d'états, et un bloc de logique combinatoire qui détermine les sorties de l'automate.

Un séquenceur avionique définit ici une séquence de segments à utiliser/voler selon une stratégie calculée, i.e. définie par des règles logiques gouvernant des suites ou séquences de segments. L'ensemble de segments résultant constitue une trajectoire verticale de référence sur laquelle sera asservi l'avion. Ainsi un séquenceur avionique assemble ici, selon des règles prédéfinies, différents segments de trajectoires respectant le plan de vol à partir d'un état avion initial ou d'une stratégie prédéfinie liée aux différents modes de guidage de l'aéronef.

Dans un mode de réalisation alternative, le procédé de l'invention est mis en œuvre par un séquenceur implémenté sur un équipement non-avionique de type tablette de vol ou sac électronique, couplé opérationnellement avec un système de gestion de vol. Un sac de vol électronique désigne un EFB (« Electronic Flight Bag » en anglais). De manière plus générale, une tablette informatique ou un écran amovible ou portable située dans le cockpit, peut être utilisée.

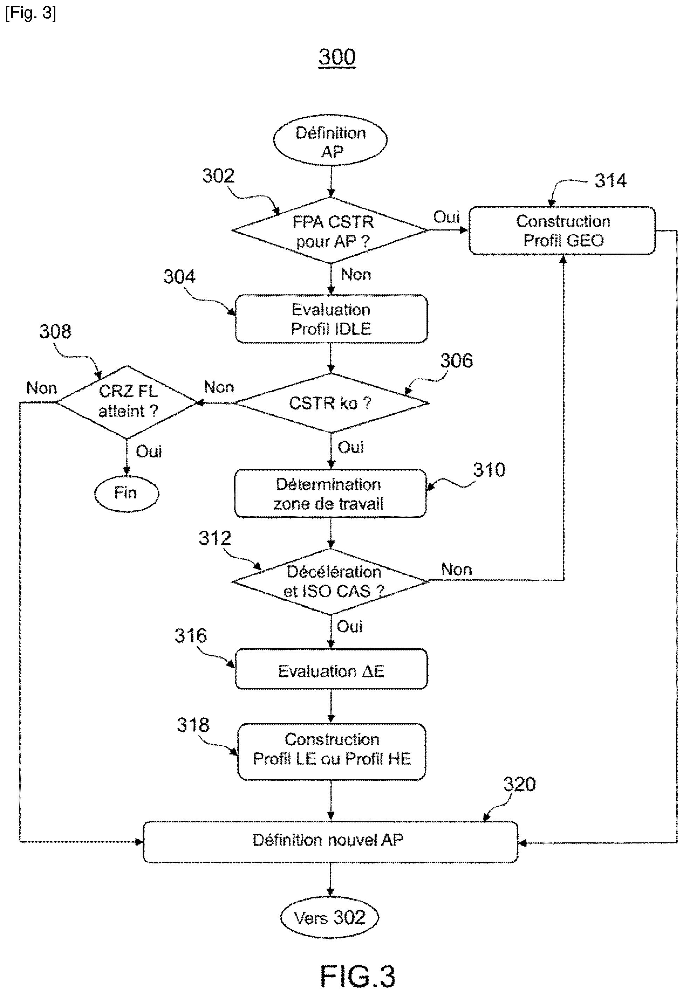

La figure 3 représente sous la forme d'un logigramme les étapes du procédé de l'invention, dans un mode de réalisation nominal.

Le procédé 300 est initialisé au cours d'un calcul de prédictions du FMS, plus précisément lors d'un calcul de profil « backward », à chaque atteinte d'un point contraint en altitude au-delà de l'approche finale, ou point d'ancrage AP.

Dans une étape préliminaire 302, le procédé consiste à vérifier si le point d'ancrage est porteur d'une contrainte de pente.

Si tel est le cas, cela signifie qu'il n'existe aucun degré de liberté, et le procédé permet de construire 314 un profil géométrique GEO jusqu'à la fin d'applicabilité de la contrainte de pente.

Si le point d'ancrage n'est pas porteur d'une contrainte de pente, le procédé poursuit par une étape 304 permettant d'initier une évaluation d'une trajectoire initiale optimisée (« IDLE Path ») qui serait sans contrainte d'altitude, pour un profil au régime moteur ralenti IDLE. La trajectoire IDLE initiale contient des segments de vol décélérés et à vitesse constante.

Dans un mode de réalisation, le procédé 300 n'est appliqué que dans le cas où la vitesse est gérée en mode managé, et comprenant une étape consistant à déterminer si la vitesse de l'aéronef est gérée en mode sélecté ou en mode managé.

Dans le cas où la vitesse déjà est gérée en mode sélecté ou revient en mode sélecté, le procédé est établi ou est rétabli sur une approche avec la construction automatique d'un profil de vol géométrique selon l'étape 314.

Après l'étape 304, le procédé dans une étape suivante 306 permet d'évaluer si toutes les contraintes en altitude sont satisfaites pour la trajectoire IDLE initiale, et donc de déterminer si au moins une des contraintes d'altitude entre le point courant de vol et le point d'ancrage n'est pas satisfaite.

Si toutes les contraintes d'altitude sont satisfaites (branche Non), le procédé permet dans une étape 308 de vérifier si le niveau de croisière est atteint avec le profil en régime IDLE.

Si le niveau de croisière est atteint, la construction du profil « IDLE » est conservée et le procédé se termine (branche Oui).

Si le niveau de croisière n'est pas atteint avec le profil « IDLE », le procédé permet de boucler sur un nouveau point d'ancrage (étape 320) et repartir de l'étape préliminaire 302.

Revenant à l'étape 306, si au moins une des contraintes d'altitude n'est pas satisfaite pour la trajectoire IDLE optimisée (branche Oui), le procédé permet dans une étape suivante 310 de définir une section de calcul ou zone de travail entre le point d'ancrage courant et le point de passage où la contrainte d'altitude serait manquée.

Dans un mode de réalisation, la zone de travail peut être ajustée pour éviter des segments trop peu pentus ou à l'inverse éviter des segments trop pentus.

Une fois la zone de travail définie, le procédé permet dans une étape suivante 312 de déterminer s'il existe dans cette zone à la fois des segments de vol décélérés et des segments de vol à vitesse constante.

S'il ne coexiste pas sur la zone de travail des segments de vol décélérés et des segments de vol à vitesse constante, le procédé permet (branche Non) dans une étape suivante 314 de construire un profil géométrique GEO.

Si sur la zone de travail, il est déterminé qu'il existe à la fois au moins un segment de vol décéléré et au moins un segment de vol à vitesse constante, le procédé permet (branche Oui) dans une étape suivante 316 de faire une évaluation du delta d'énergie pour rejoindre la trajectoire IDLE depuis le point de passage contraint, afin de vérifier quelle stratégie de dissipation d'énergie peut être mise en œuvre sur la zone de travail.

L'évaluation du delta d'énergie permet de construire un profil de vol pour la section de travail, qui tient compte du résultat de l'évaluation. Le profil de vol peut consister pour la section considérée, soit à suivre des pentes plus faibles qui conduiront à remettre de la poussée, soit à utiliser les aérofreins pour suivre des pentes plus fortes.

Dans un mode de réalisation, correspondant à la présente description d'un exemple pris pour faciliter la compréhension des principes de l'invention, le procédé est mis en œuvre en considérant uniquement l'énergie potentielle E_{P} et l'évaluation est faite quant au delta d'énergie potentielle ΔE = ΔE_{P}.

Cependant, cet exemple n'est pas limitatif, et le procédé peut s'appliquer pour l'énergie cinétique E_{C} et une évaluation du delta d'énergie cinétique ΔE = ΔE_{C}.

Dans une variante de réalisation, le procédé peut s'appliquer pour faire une évaluation du delta d'énergie totale, soit de la totalité de l'énergie potentielle et cinétique ΔE = ΔE_{P} + ΔE_{C}.

Après l'étape 316 d'évaluation de l'énergie restante, le procédé permet dans une étape suivante 318 de construire un profil de vol spécifique permettant une dissipation d'énergie adaptée selon le résultat de l'évaluation, le profil de vol pouvant être un profil LE dit à faible énergie ou un profil HE dit à haute énergie.

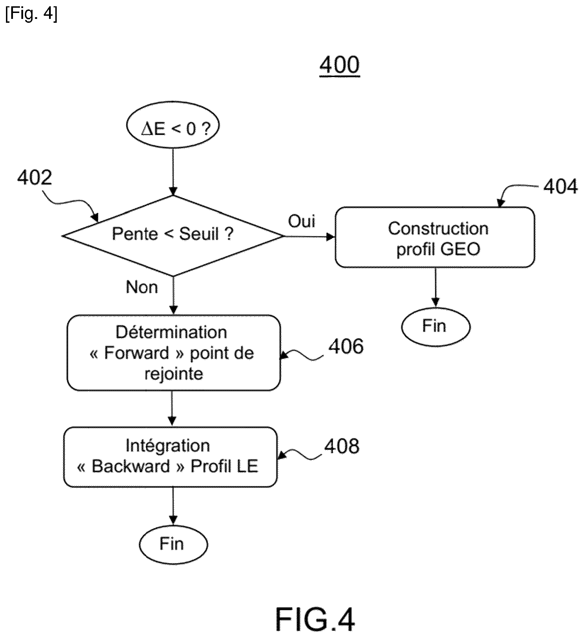

Si l'évaluation indique que le delta d'énergie potentielle est négatif (i.e. la contrainte manquée est en-dessous de la trajectoire de vol fournie par le profil IDLE initial), le procédé permet de construire un profil LE. Le profil LE permet d'abaisser les segments à vitesse constante tout en les maintenant à un niveau suffisant, i.e. remettre de la poussée ou de l'énergie sans que la pente ne soit trop faible. La figure 4 illustre un mode de réalisation des étapes permettant de construire un profil LE.

Si l'évaluation indique que le delta d'énergie potentielle est positif (i.e. la contrainte manquée est au-dessus de la trajectoire de vol fournie par le profil IDLE initial), le procédé permet de construire un profil HE. Le profil HE permet d'augmenter prioritairement les segments de décélération avant de rehausser la pente de ceux à vitesse constante, i.e. mettre des aérofreins car il y a trop d'énergie.

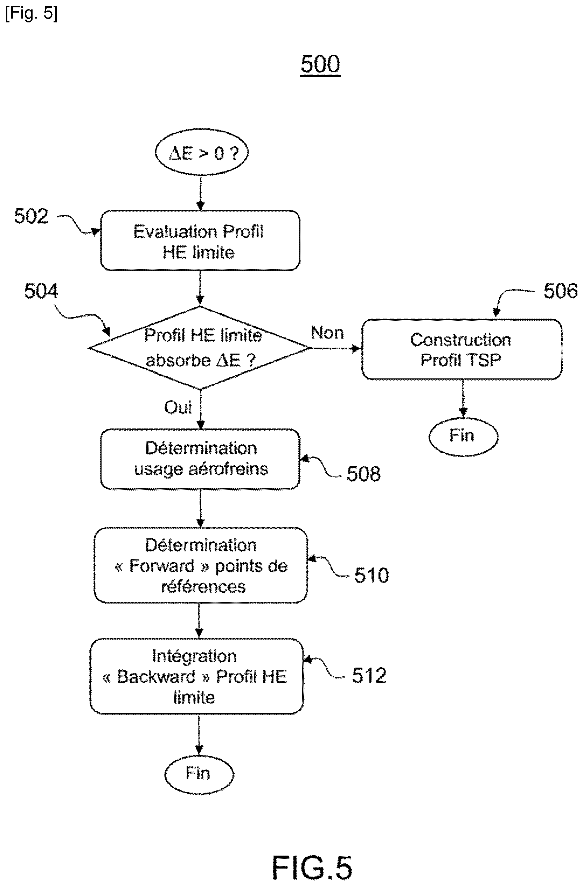

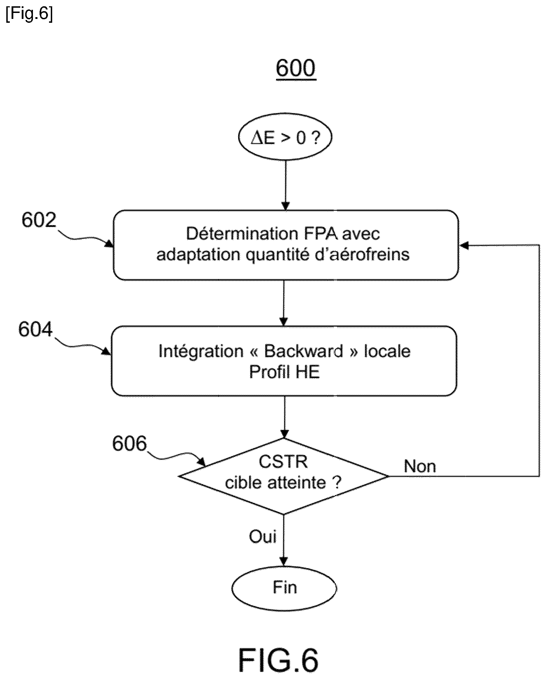

Les figures 5 et 6 illustrent deux variantes de construction d'un profil HE.

L'étape 318 de construction d'un profil LE ou HE permet de fournir un profil de référence entre le point d'ancrage et le point de passage de la contrainte manquée ciblée.

Après l'étape de construction du profil LE ou HE, le procédé permet de reboucler 320 sur un prochain point d'ancrage, qui sera le point représentant la prochaine contrainte cible.

Le procédé de l'invention peut s'implémenter sous la forme d'un programme comprenant des instructions de code non transitoires qui lorsque le programme est exécuté par un processeur, conduisent celui-ci à exécuter les étapes décrites du procédé de calcul d'une trajectoire 4D de descente et d'approche selon l'invention.

La figure 4 représente sous la forme d'un logigramme des étapes de construction d'un profil LE à faible énergie, dans un mode de réalisation du procédé de l'invention.

Il s'agit d'une situation lorsque le point cible détecté par l'évaluation IDLE est une contrainte manquée qui se trouve en-dessous de la trajectoire IDLE optimisée. Le profil résultant est alors un profil à faible énergie. Par conséquent, l'objectif de la trajectoire optimisée est d'éviter l'utilisation des aérofreins d'une part, et de limiter au maximum l'utilisation de la poussée d'autre part sans engendrer de segments trop peu pentus.

La solution proposée dans la variante de la figure 4 consiste à maintenir le plus longtemps possible le régime ralenti depuis le point d'ancrage afin de minimiser au maximum la consommation de carburant et le bruit à basse altitude.

Et sur la partie adaptée pour respecter le point cible, la solution proposée consiste que toute décélération soit effectuée sur un ensemble de pentes équivalentes à la pente du régime ralenti, en évitant les segments peu pentus (c'est-à-dire avec une pente moins pentue que la pente équivalente au régime ralenti).

Le procédé permet de faire une vérification en 402 pour évaluer si la pente géométrique résultante dans la zone de travail est trop peu pentue.

Si la pente est trop peu pentue (branche Oui), le procédé permet dans une étape suivante 404 la construction d'un profil de vol GEO, afin d'éviter des segments trop peu pentus qui pourraient gêner les pilotes et les contrôleurs aériens en raison de taux de descente trop faibles en opérations, tout en engendrant des excursions excessives contraires aux normes en vigueur.

Si la pente est suffisamment pentue (branche Non), le procédé permet de faire une évaluation en 406 afin de déterminer, en mode de calcul vers l'avant depuis le point haut de la section de travail, un point de rejointe parmi ceux établis dans le profil IDLE lors de l'évaluation IDLE initiale en 304, et les éventuels points de passage. Le point de rejointe sélectionné répond à l'objectif de minimiser les parties géométrisées, en maximisant les parties volées au régime IDLE sans remise de poussée additionnelle.

Le procédé se poursuit par une étape 408 consistant, sur la base de l'évaluation IDLE initiale et du point de rejointe sélectionné, à intégrer un profil en mode à rebours, depuis le point d'ancrage jusqu'au point visé, le profil se caractérisant par un régime IDLE jusqu'au point de rejointe, puis une construction géométrique entre le point de rejointe et le point visé. De cette manière, les pentes de décélérations sont conservées et les pentes à vitesse constantes sont adaptées pour absorber le delta d'énergie requis.

L'algorithme de construction d'un profil LE à faible énergie se termine et reboucle sur l'étape 320 du procédé général.

La figure 5 représente sous la forme d'un logigramme des étapes de construction d'un profil HE à haute énergie, dans un premier mode de réalisation du procédé de l'invention.

Il s'agit d'une situation lorsque le point cible détecté par l'évaluation IDLE est une contrainte manquée qui se trouve au-dessus de la trajectoire IDLE optimale. Le profil résultant est alors un profil à haute énergie, et l'utilisation des aérofreins est nécessaire pour le suivre.

Le but de la trajectoire optimisée est alors d'utiliser une poussée au ralenti tout au long de la trajectoire tout en limitant au maximum l'utilisation des aérofreins aux parties en décélération, avant de l'étendre aux segments à vitesse constante.

Avantageusement, maintenir le plus longtemps possible le régime moteur au ralenti depuis le point d'ancrage minimise au maximum le bruit et la consommation de carburant à basse altitude, tout en minimisant l'usage des aérofreins.

Un autre avantage de cette construction HE est d'assurer autant que possible une capacité à absorber une décélération tout au long du profil, par exemple une limitation de vitesse ATC.

Ainsi la solution consiste en ce que les aérofreins sont d'abord appliqués progressivement sur les segments de décélération, de telle sorte à garantir un taux de décélération minimum et qu'aucune décélération ne conduira l'avion à piquer.

Dans le cas où plus de traînée est nécessaire, les aérofreins sont appliqués progressivement sur les segments à vitesse constante.

Lorsque le fait de rehausser tous les segments de décélération n'est pas suffisant, les aérofreins sont appliqués progressivement sur les segments à vitesse constante.

Selon différents modes de réalisation, l'application des aérofreins se fait soit des parties supérieures vers les parties inférieures, soit des parties inférieures vers les parties supérieures.

Revenant à la figure 5, si l'évaluation indique que le delta d'énergie potentielle est positif, le procédé permet dans une première étape 502 de construire une évaluation de profil haute énergie maximisée (i.e. la plus agressive possible), avec un profil IDLE ayant le taux maximum d'aérofreins autorisés, par exemple 50%.

Cette construction reste limitée aux éventuelles contraintes d'altitude intermédiaires contraignantes qui doivent être respectées.

Dans une étape suivante 504, le procédé permet de déterminer si ce profil permet ou non d'absorber le delta d'énergie à résorber.

Si ce profil HE max ne le permet pas (branche Non), le procédé permet en 506 de construire un profil de type « Too Steep Path » TSP, qui est constitué de l'assemblage du profil HE max, et d'une discontinuité verticale à la distance à la destination de la contrainte de fin de la section de travail.

Ce profil permet de résorber, de façon théorique, le delta d'énergie résiduel. Cette construction est particulièrement adaptée en cas de discontinuités de plan de vol sur le plan latéral, qui fausse la longueur de la trajectoire, et par conséquent, les pentes résultantes dans le plan vertical.

Si le profil HE max permet d'absorber plus d'énergie que le delta d'énergie à résorber (branche Oui), le procédé permet dans une étape suivante 508 de déterminer si des aérofreins seront nécessaires sur un ou plusieurs segments décélérés, et éventuellement sur un ou plusieurs segments à vitesse constante, l'objectif étant toujours de rejoindre l'évaluation IDLE initiale.

Puis le procédé poursuit par une étape 510 permettant de déterminer, en mode de calcul vers l'avant, des points de passage intermédiaires dit points de références, à partir des données obtenues à l'étape précédente et de données caractérisant les performances de l'aéronef.

Ces points sont ensuite visés par une intégration du profil depuis le point d'ancrage jusqu'au point final visé de façon à naturellement appliquer des aérofreins sur les segments souhaités.

Le procédé se poursuit par une étape 512 consistant à intégrer un profil en mode à rebours, depuis le point d'ancrage jusqu'au point visé, le profil permettant d'appliquer des aérofreins sur les segments décélérés en priorité, puis de les appliquer sur les segments à vitesse constante.

Selon différents modes de réalisation, l'application des aérofreins se fait soit des parties supérieures vers les parties inférieures, soit des parties inférieures vers les parties supérieures.

L'algorithme de construction d'un profil HE à haute énergie se termine et reboucle sur l'étape 320 du procédé général.

La figure 6 représente sous la forme d'un logigramme une variante de réalisation des étapes de construction d'un profil HE à haute énergie selon le procédé de l'invention.

Cette variante offre un algorithme de calcul de profil HE plus simple, notamment du point de vue des performances de calcul et de la complexité logicielle. Elle permet de réduire l'impact CPU sans dégrader significativement les bénéfices opérationnels.

Il s'agit généralement de déterminer, en 602, un angle de la trajectoire de vol FPA, puis de faire en 604 une intégration backward segment par segment, jusqu'à l'atteinte d'une condition de vérification d'atteinte de la contrainte cible en 606.

Le calcul backward, segment par segment garantit que la trajectoire reste volable localement avec le taux maximum d'aérofreins autorisé et un taux minimum de décélération lorsqu'il est requis.

Pour cela, pour chaque segment, la pente moyenne menant à la contrainte visée est comparée à la pente maximale volable, et la plus contraignante est retenue tout en garantissant une utilisation suffisante des aérofreins pour éviter des « Too Steep Path » indus.

Cette variante consiste à intégrer à rebours et par morceaux le profil, depuis le dernier point issu de l'évaluation IDLE initiale, se situant au-dessus de la pente géométrique entre le point d'ancrage et la contrainte cible, et ce jusqu'à la contrainte cible.

Chaque morceau de l'intégration correspond à une pente sol fixe, géométrique, qui est comprise dans un cône.

Dans un mode de réalisation le cône est défini par dans une borne haute à ce que l'avion est capable de voler avec une extension maximale des aérofreins (soit sur un segment de décélération avec un taux cible, soit sur un segment à vitesse constante) ; et dans une borne basse, à la pente géométrique entre le point de début d'intégration et la contrainte cible, elle-même limitée par la pente IDLE (de manière à ne pas induire de remise de poussée ni de « Too Steep Path » indus).

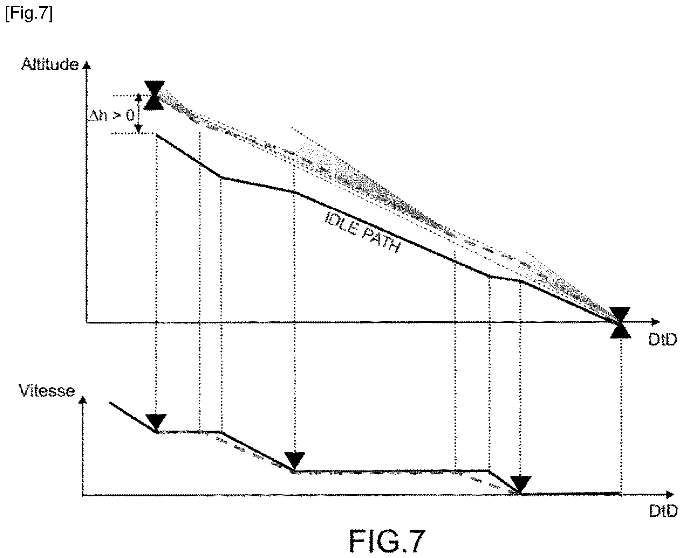

La figure 7 illustre la construction d'un profil HE selon cette variante, montrant la pente géométrique entre le point courant d'intégration et la contrainte cible, et la pente la plus pentue volable par l'avion en considérant l'extension maximale des aérofreins.

De façon à utiliser la quantité d'aérofreins requise au juste besoin pour limiter au maximum les remises de poussée tout en évitant la création de "Too Steep Path", le pourcentage d'aérofreins peut être défini par des estimations basées sur des méthodes géométriques ou énergétiques, tout en considérant les capacités de l'aéronef qui sont connues par sa base de données de performances.

Ce mécanisme est répété jusqu'à l'atteinte de la contrainte cible en haut, avec une discrétisation qui est donnée par des points d'arrêt qui peuvent varier selon le mode de réalisation choisi.

Ce type de construction présente l'avantage d'être générique et s'applique aux portions dites HE comme aux portions dites TSP.

De façon à limiter le nombre de « Too Steep Path » qui incluent par définition une discontinuité verticale ayant des impacts opérationnels et un impact négatif sur la charge de travail des pilotes notamment, le taux de décélération visé sur les segments décélérés est automatiquement réduit, ce qui permet d'augmenter la pente sol en dégradant le taux de décélération.

La construction dite « Too Steep Path » correspond au profil le plus élevé et est induite par toute contrainte d'altitude qui nécessite d'être au-dessus de ce chemin. Ce profil applique un taux maximal d'aérofreins sur les décélérations et les parties à vitesse constantes, et se termine par une discontinuité verticale lorsqu'il atteint la distance de la contrainte contraignante. Si le profil d'altitude résultant est donc discontinu, le profil de vitesse lui reste continu, même en « franchissant » la discontinuité verticale.

Pour permettre au pilote d'anticiper ce type de discontinuité, un marqueur est affiché dans le cockpit, sur la page plan de vol à l'endroit où la discontinuité est générée. Lorsque la discontinuité est atteinte, le système peut demander au pilote d'étendre les aérofreins si nécessaires, et adapte automatiquement les modes de guidage pour favoriser la reconvergence.

La présentation dans le cockpit de la trajectoire ainsi obtenue, le guidage automatique sur cette trajectoire, et la présentation explicite des hypothèses de calcul utilisées (changement de vitesse et actionneur), à travers une symbologie adaptée, permettent au(x) pilote(s) d'optimiser la trajectoire tout en garantissant la stabilisation de l'aéronef à 1000 ft AGL.

Ainsi, proposer des pentes différentes pour les parties volées à vitesse constante et les parties décélérées permet d'améliorer la dissipation d'énergie cinétique, actuellement problématique, tout en réduisant l'utilisation des moteurs et des aérofreins.

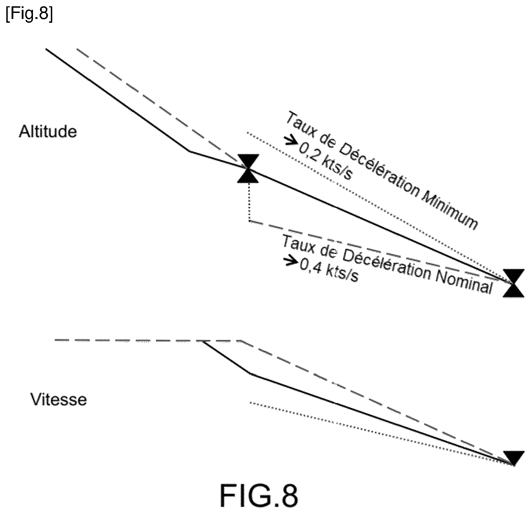

La figure 8 est une illustration de l'effet du taux de décélération sur l'altitude.

Dans une variante de réalisation, toujours dans le but de ne pas créer de TSP indus, l'utilisation locale des aérofreins sur les segments décélérés et/ou à vitesse constante, s'il est estimé que le delta d'altitude à compenser le nécessite, peut, par exemple, être basée sur l'une des méthodes suivantes (liste non exhaustive) :
- une intégration numérique jusqu'à la contrainte cible ;
- une estimation de l'ensemble des pentes successivement applicables au regard du delta d'énergie à absorber ;
- une estimation énergétique globale considérant l'énergie totale de l'aéronef.

En résumé, la présente invention permet:
- la définition d'une trajectoire de descente sur-mesure, optimisée et non géométrique au regard des performances de l'avion et du contexte dans lequel il évolue (conditions météorologiques et plan de vol) permettant de réduire l'utilisation des moteurs, des aérofreins, et donc in fine une stratégie de dissipation d'énergie plus efficace.
- la mise en œuvre de logiques spécifiques adaptées aux situations de faible énergie, et de haute énergie selon la typologie de scénario.
- l'affichage des informations de contexte et des actions à réaliser par le pilote pour respecter la stratégie optimisée.

Les avantages de l'invention sont ainsi:
- une réduction de l'utilisation des moteurs.
- une réduction de l'utilisation des aérofreins.
- une meilleure anticipation et compréhension pour le pilote des actions à mener pour dissiper efficacement l'énergie selon la situation rencontrée.
- une facilitation des échanges sol / bord.
- une fluidification du trafic.

## Revendications

1. Procédé (300) mis en œuvre par un ordinateur pour la gestion de l'énergie à dissiper pour un aéronef lors des phases de descente et d'approche, le procédé comprenant des étapes exécutées au cours d'un calcul à rebours de prédictions par un système de gestion de vol, quand un point de passage est identifié (302) comme un point d'ancrage ayant des contraintes en altitude mais pas de contraintes en pente, les étapes consistant à :
- déterminer (304) une trajectoire de vol initiale IDLE en régime moteur ralenti, entre un point d'ancrage et le niveau de vol de croisière, et évaluer (306) si toutes les contraintes en altitude sont satisfaites pour la trajectoire IDLE ;
- si au moins une contrainte en altitude n'est pas satisfaite, définir (310) une section de travail entre le point d'ancrage et le point de passage où la contrainte d'altitude n'est pas satisfaite, et déterminer (312) si dans cette section, il existe à la fois un ou plusieurs segments de vol décélérés et un ou plusieurs segments de vol à vitesse constante ;
- s'il existe au moins un segment de vol décéléré et au moins un segment de vol à vitesse constante :
- évaluer (316) un delta d'énergie pour rejoindre la trajectoire IDLE ; et
- construire (318) un profil de vol optimisé tenant compte de l'évaluation, le profil de vol optimisé consistant pour ladite section soit à remettre exclusivement de la poussée, soit à utiliser exclusivement les aérofreins, tout en maximisant la distance parcourue en IDLE.

2. Procédé selon la revendication 1 dans lequel l'étape d'évaluation (316) consiste à déterminer si le delta d'énergie est négatif ou positif.

3. Procédé selon la revendication 2 dans lequel l'étape de construction d'un profil de vol optimisé consiste à construire un profil faible énergie consistant à remettre exclusivement de la poussée si le delta d'énergie est négatif.

4. Procédé selon la revendication 2 dans lequel l'étape de construction d'un profil de vol optimisé consiste à construire un profil haute énergie consistant à utiliser exclusivement les aérofreins si le delta d'énergie est positif.

5. Procédé selon l'une quelconque des revendications précédentes dans lequel l'étape de construction d'un profil de vol consistant à remettre exclusivement des aérofreins comprend des étapes consistant à déterminer un angle de la trajectoire de vol, et à faire une intégration à rebours segment par segment, jusqu'à l'atteinte d'une condition de vérification d'atteinte de la contrainte cible.

6. Procédé selon l'une quelconque des revendications précédentes dans lequel l'étape de déterminer dans une section de travail les segments de vol décélérés et les segments de vol à vitesse constante, comprend une étape consistant à construire un profil de vol géométrique s'il n'existe pas sur ladite section de travail à la fois au moins un segment de vol décéléré et un segment de vol à vitesse constante.

7. Procédé selon l'une quelconque des revendications précédentes comprenant une étape consistant à déterminer si la vitesse de l'aéronef est gérée en mode sélecté et si oui maintenir uniquement la construction d'un profil de vol géométrique.

8. Procédé selon l'une quelconque des revendications précédentes comprenant de plus une étape consistant à afficher sur un écran d'affichage du cockpit, la trajectoire obtenue par un profil de vol optimisé.

9. Procédé selon l'une quelconque des revendications précédentes comprenant de plus une étape (320) consistant à définir un nouveau point d'ancrage.

10. Produit programme d'ordinateur comprenant des instructions de code permettant d'effectuer les étapes du procédé selon l'une quelconque des revendications de procédé 1 à 9, lorsque ledit programme est exécuté sur un ordinateur.

11. Dispositif pour gérer l'énergie à dissiper pour un aéronef lors des phases de descente et d'approche, le dispositif comprenant des moyens pour mettre en œuvre les étapes du procédé de l'une quelconque des revendications 1 à 9.

12. Système de gestion de vol pour aéronef comprenant un dispositif selon la revendication 11.

13. Equipement non-avionique pour aéronef comprenant un dispositif selon la revendication 11.

## Patentansprüche

1. Verfahren (300), das von einem Computer umgesetzt wird, für das Management der abzuführenden Energie für ein Luftfahrzeug in den Phasen des Sink- und Anflugs, wobei das Verfahren Schritte umfasst, die im Laufe einer Rückwärtsrechnung von Vorhersagen durch ein Flugmanagementsystem ausgeführt werden, wenn ein Durchgangspunkt als Verankerungspunkt identifiziert (302) wird, der Höhenbeschränkungen, jedoch keine Neigungsbeschränkungen aufweist, wobei die Schritte darin bestehen:
- eine ursprüngliche IDLE-Flugbahn im Motorleerlauf zwischen einem Verankerungspunkt und der Reiseflughöhe zu bestimmen (304), und zu bewerten (306), ob alle Höhenbeschränkungen für die IDLE-Flugbahn erfüllt sind;
- wenn mindestens eine Höhenbeschränkung nicht erfüllt ist, einen Arbeitsabschnitt zwischen dem Verankerungspunkt und dem Durchgangspunkt zu definieren (310), wo die Höhenbeschränkung nicht erfüllt ist, und, zu bestimmen (312), ob in diesem Abschnitt gleichzeitig ein oder mehrere verzögerte Flugsegmente und ein oder mehrere Flugsegmente mit konstanter Geschwindigkeit vorhanden sind;
- wenn mindestens ein verzögertes Flugsegment und mindestens ein Flugsegment mit konstanter Geschwindigkeit vorhanden sind:
- ein Energie-Delta zu bewerten (316), um wieder zur IDLE-Flugbahn zu gelangen; und
- ein optimiertes Flugprofil aufzubauen (318), das die Bewertung berücksichtigt, wobei das optimierte Flugprofil für den Abschnitt darin besteht, entweder ausschließlich Schub zu reaktivieren, oder ausschließlich die Landeklappen zu verwenden, und dabei die in IDLE zurückgelegte Distanz zu maximieren.

2. Verfahren nach Anspruch 1, wobei der Schritt zum Bewerten (316) darin besteht, zu bestimmen, ob das Energie-Delta negativ oder positiv ist.

3. Verfahren nach Anspruch 2, wobei der Schritt zum Aufbauen eines optimierten Flugprofils darin besteht, ein schwaches Energieprofil aufzubauen, das darin besteht, ausschließlich Schub zu reaktivieren, wenn das Energie-Delta negativ ist.

4. Verfahren nach Anspruch 2, wobei der Schritt zum Aufbauen eines optimierten Flugprofils darin besteht, ein starkes Energieprofil aufzubauen, das darin besteht, ausschließlich die Landeklappen zu verwenden, wenn das Energie-Delta positiv ist.

5. Verfahren nach einem der vorstehenden Ansprüche, wobei der Schritt zum Aufbauen eines Flugprofils, der darin besteht, ausschließlich Landeklappen zu reaktivieren, Schritte umfasst, die darin bestehen, einen Winkel der Flugbahn zu bestimmen, und eine segmentweise Rückwärtsintegration bis zum Erreichen einer Überprüfungsbedingung zum Erreichen der Zielbeschränkung durchzuführen.

6. Verfahren nach einem der vorstehenden Ansprüche, wobei der Schritt zum Bestimmen in einem Arbeitsabschnitt der verzögerten Flugsegmente und der Flugsegmente mit konstanter Geschwindigkeit, einen Schritt umfasst, der darin besteht, ein geometrisches Flugprofil aufzubauen, wenn in dem Arbeitsabschnitt nicht gleichzeitig mindestens ein verzögertes Flugsegment und ein Flugsegment mit konstanter Geschwindigkeit vorhanden sind.

7. Verfahren nach einem der vorstehenden Ansprüche, umfassend einen Schritt, der darin besteht, zu bestimmen, ob die Geschwindigkeit des Luftfahrzeugs im selektierten Modus gemanagt wird, und, wenn ja, nur den Aufbau eines geometrischen Flugprofils aufrecht zu erhalten.

8. Verfahren nach einem der vorstehenden Ansprüche, weiter umfassend einen Schritt, der darin besteht, auf einem Anzeigebildschirm des Cockpits die durch ein optimierte Flugprofil erhaltene Flugbahn anzuzeigen.

9. Verfahren nach einem der vorstehenden Ansprüche, weiter umfassend einen Schritt (320), der darin besteht, einen neuen Verankerungspunkt zu definieren.

10. Computerprogrammprodukt, umfassend Codeanweisungen, die ermöglichen, die Schritte des Verfahrens nach einem der Verfahrensansprüche 1 bis 9 durchzuführen, wenn das Programm auf einem Computer ausgeführt wird.

11. Vorrichtung zum Managen der abzuführenden Energie für ein Luftfahrzeug in den Phasen des Sink- und Anflugs, wobei die Vorrichtung Mittel zum Umsetzen der Schritte des Verfahrens nach einem der Ansprüche 1 bis 9 umfasst.

12. Flugmanagementsystem für ein Luftfahrzeug, das eine Vorrichtung nach Anspruch 11 umfasst.

13. Nicht-Avionik-Ausrüstung für ein Luftfahrzeug, das eine Vorrichtung nach Anspruch 11 umfasst.

## Claims

1. Method (300) implemented by a computer for the management of the energy to be dissipated for an aircraft during the descent and approach phases, the method comprising steps executed during a prediction regression calculation by a flight management system, when a waypoint is identified (302) as an anchor point having altitude constraints but no flight path angle constraints, the steps consisting in:
- determining (304) an IDLE initial flight trajectory in the idle regime, between an anchor point and the cruising flight level, and evaluating (306) whether all the altitude constraints are satisfied for the IDLE trajectory;
- if at least one altitude constraint is not satisfied, defining (310) a work section between the anchor point and the waypoint where the altitude constraint is not satisfied, and determining (312) if in this section, there are both one or more decelerated flight segments and one or more constant-speed flight segments;
- if there is at least one decelerated flight segment and at least one constant-speed flight segment:
- evaluating (316) an energy delta to join the IDLE trajectory; and
- constructing (318) an optimized flight profile taking account of the evaluation, the optimized flight profile consisting for said section either in adding thrust exclusively, or in using the air brakes exclusively, while maximizing the distance traveled in IDLE.

2. Method according to claim 1 wherein the step of evaluating (316) consists in determining whether the energy delta is negative or positive.

3. Method according to claim 2 wherein the step of constructing an optimized flight profile consists in constructing a low energy profile consisting in adding thrust exclusively if the energy delta is negative.

4. Method according to claim 2 wherein the step of constructing an optimized flight profile consists in constructing a high energy profile consisting in using the air brakes exclusively if the energy delta is positive.

5. Method according to any of the preceding claims wherein the step of constructing a flight profile consisting in using air brakes exclusively comprises steps consisting in determining an angle of the flight trajectory, and of making a regression integration segment by segment, until a verification condition that the target constraint has been reached is reached.

6. Method according to any of the preceding claims wherein the step of determining in a work section the decelerated flight segments and the constant-speed flight segment, comprises a step consisting in constructing a geometric flight profile if on said work section both at least one decelerated flight segment and one constant-speed flight segment do not exist.

7. Method according to any of the preceding claims comprising a step consisting in determining if the speed of the aircraft is managed in selected mode and if so maintaining only the construction of a geometric flight profile.

8. Method according to any of the preceding claims further comprising a step consisting in displaying on a display screen of the cockpit, the trajectory obtained by an optimized flight profile.

9. Method according to any one of the preceding claims further comprising a step (320) consisting in defining a new anchor point.

10. Computer program product comprising code instructions making it possible to carry out the steps of the method according to any of method claims 1 to 9, when said program is executed on a computer.

11. Device for managing the energy to be dissipated for an aircraft during the descent and approach phases, the device comprising means for implementing the steps of the method of any of claims 1 to 9.

12. Flight management system for aircraft comprising a device according to claim 11.

13. Non-avionics equipment for aircraft comprising a device according to claim 11.
